# EUROPÄISCHE PATENTANMELDUNG

(11) **EP 2 224 125 A2**
(43) Veröffentlichungstag der Anmeldung: **01.09.2010**
(21) Anmeldenummer: 10005776.9
(22) Anmeldetag: 22.07.2008
(51) Int. Cl.: F03B 17/06

(54) **Vorrichtung zur Erzeugung von Energie aus eines Fluidströmung**

(30) Priorität: 25.07.2007 DE 102007034618
(62) Teilanmeldung aus: 08784959.2
(71) Anmelder: Hamann, Georg, 83259 Schleching (DE)
(72) Erfinder: Hamann, Georg, 83259 Schleching (DE)
(74) Vertreter: Reinhardt, Markus

(57) **Zusammenfassung**

Es wird ein Kugellagerkopf (12) beschrieben, der einen Grundkörper aufweist, der mehrere Fortsätze hat, die sich in radialer Richtung vom Grundkörper aus nach außen erstrecken und Aufnahmen für Stützen (4) ausbilden, die eine Antriebswelle (6) gegenüber einem Gehäuse einer Anlage (1) zur Erzeugung von Energie aus einer Fluidströmung abstützen, wobei in dem Grundkörper eine Hülse konzentrisch angeordnet ist, die eine Innenverzahnung hat, die mit einer Außenverzahnung der Antriebswelle (6) in Eingriff steht, und wobei zwischen dem Grundkörper und der Hülse ein Kugellager derart vorgesehen ist, dass sich die Antriebswelle (6) relativ zum Grundkörper frei verdrehen kann.

## Beschreibung

Die vorliegende Erfindung betrifft ganz allgemein eine Vorrichtung zur Erzeugung von Energie aus einer Fluidströmung und betrifft insbesondere einen Kugellagerkopf nach dem Oberbegriff des Patentanspruchs 1.

Bekannte Vorrichtungen zur Erzeugung von Energie aus einer Fluidströmung sind beispielsweise offenbart in der DE-OS 2 351 282 oder in der DE-PS 119 352. Dort sind einerseits eine Rohrturbine in einem Stollen und auf der anderen Seite Turbinenräder auf einem Schwimm-Ponton beschrieben. In der WO 2007/079973 ist ein gattungsgemäßer Kugellagerkopf offenbart.

Die DE-OS 2 351 282 befasst sich mit der Lagerung einer kompletten Rohrturbine bestehend aus einem Generator und einer Turbine in einem vom Wasser durchströmten Stollen. Die gesamte Rohrturbine wird dabei am Turbinen-Gehäuse über Stützen im Stollen an der Stollenwand gelagert. Die Abstützung soll dabei über im Vergleich zur großen und schweren Rohrturbine "kleine Bauteile" erfolgen.

In der DE-PS 119 352 ist ein Schwimmponton offenbart, welches eine Vielzahl von Turbinenrädern offenliegend trägt.

Die gattungsbildende WO 2007/079973 zeigt eine Anlage und Vorrichtung zur Erzeugung von Energie aus einer Fluidströmung, bei der eine Antriebswelle innerhalb eines rohrförmigen Gehäuses mittels einer Mehrzahl von Kugellagerköpfen gelagert ist, wobei die Ausbildung der Kugellagerköpfe (siehe dort Figur 14) nicht beschrieben ist.

Es ist die Aufgabe der vorliegenden Erfindung, eine Anlage und Vorrichtung zur Erzeugung von Energie aus einer Fluidströmung zu schaffen, die einfach zu warten ist wobei insbesondere ein langlebiger und wartungsfreundlicher Kugellagerkopf geschaffen werden soll.

Die Erfindung weist zur Lösung dieser Aufgabe die im Patentanspruch 1 angegebenen Merkmale auf.

Diese Aufgabe wird erreicht durch einen Kugellagerkopf nach Patentanspruch 1, der einen Grundkörper aufweist, der mehrere Fortsätze hat, die sich in radialer Richtung vom Grundkörper aus nach außen erstrecken und Aufnahmen für Stützen ausbilden, die die Antriebswelle gegenüber dem Gehäuse der Anlage abstützen, wobei in dem Grundkörper eine Hülse konzentrisch angeordnet ist, die eine Innenverzahnung hat, die mit einer Außenverzahnung der Antriebswelle in Eingriff steht, und wobei zwischen dem Grundkörper und der Hülse ein Kugellager derart vorgesehen ist, dass sich die Antriebswelle relativ zum Grundkörper frei verdrehen kann.

Vorzugsweise wird dieser erfindungsgemäße Kugellagerkopf jeweils im Abstand von etwa 1 m entlang der Antriebswelle der Anlage vorgesehen. Diese mehrfache Lagerung der Antriebswelle bewirkt einen sehr vibrationsarmen Lauf der Antriebswelle, was wiederum der Lebensdauer zu Gute kommt und zudem einen geräuscharmen Lauf der gesamten Vorrichtung unterstützt.

Vorteilhafte Ausführungsformen des erfindungsgemäßen Kugellagerkopfes sind der Gegenstand der Unteransprüche 2 bis 9.

Die vorstehende Aufgabe, die Ziele, Merkmale und Vorteile nach der vorliegenden Erfindung können unter Berücksichtigung der folgenden, detaillierten Beschreibung der bevorzugten Ausführungsformen der vorliegenden Erfindung und unter Bezugnahme auf die zugehörigen Zeichnungen besser verstanden werden.

Die Erfindung wird im folgenden anhand der Zeichnungen näher erläutert. Diese zeigen in:
Fig. 1 eine schematische Darstellung eines Abschnittes der erfindungsgemäßen Anlage zur Erzeugung von Energie, wobei ein Teil eines Gehäuses der Anlage weg gelassen worden ist, um das Innere der Anlage zu zeigen;
Fig. 2 eine schematische Darstellung eines Abschnittes der erfindungsgemäßen Anlage zur Erzeugung von Energie, wobei diese perspektivische Ansicht einen Blick in das Innere der Anlage darstellt, um die Abstützung einer Antriebswelle in einem Gehäuse zu zeigen;
Fig. 3 eine vergrößerte perspektivische Ansicht eines Teils der Anlage nach der Figur 2, wobei die Schaufeln hier schematisch dargestellt sind und die Befestigung der Abstützung am Gehäuse gezeigt ist;
Fig. 4 eine schematische Darstellung der Anlage, die in einem Flußbett verankert ist, wobei Wasser durch die Anlage strömt;
Fig. 5 eine schematische Darstellung eines Abschnittes der erfindungsgemäßen Anlage zur Erzeugung von Energie, ähnlich der Figur 1, wobei ein Teil eines Gehäuses der Anlage weg gelassen worden ist, um das Innere der Anlage zu zeigen, allerdings mit einer über den Umfang des Gehäuses vorgesehenen Dreiteilung der Segmente;
Fig. 6 zwei Darstellungen einer Stütze, die die Antriebswelle der Anlage gegenüber dem Gehäuse abstützt;
Fig. 7 mehrere Darstellungen eines Nutensteines, der zur Verankerung bzw. Befestigung der Stütze nach der Figur 6 am Gehäuse bzw. dem Verbindungsprofil nach der Figur 5 dient;
Fig. 8 eine Querschnittansicht eines erfindungsgemäßen Kugellagerkopfes;
Fig. 9 eine perspektivische Ansicht einer Hülse, die innerhalb des Kugellagerkopfes nach der Figur 8 eingebaut ist; und
Fig. 10 eine perspektivische Ansicht einer weiteren Ausführungsform eines Kugellagerkopfes nach der Figur 8.

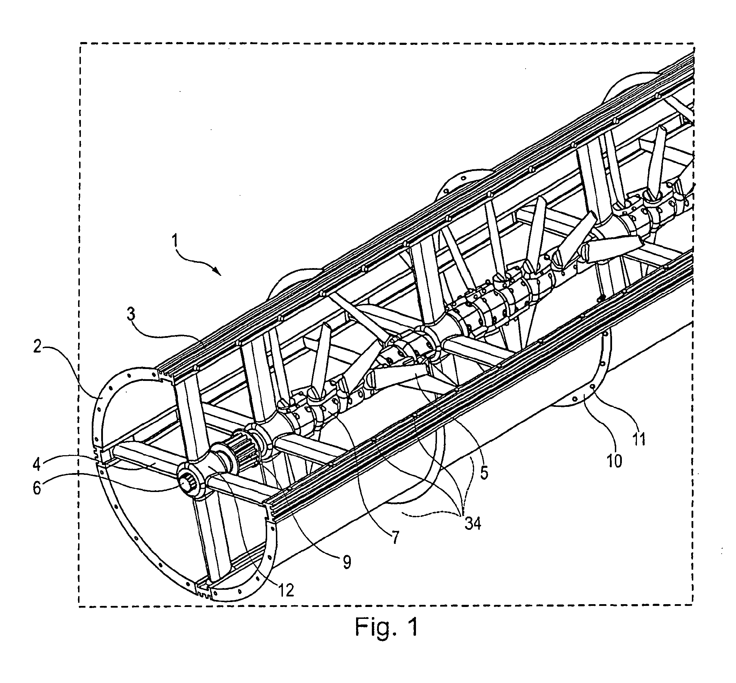

Gemäß einer bevorzugten Ausführungsform nach der vorliegenden Erfindung, die in der Figur 1 dargestellt ist, umfasst eine Anlage 1 zur Erzeugung von Energie aus einer durch die Anlage 1 in axialer Richtung geleiteten Fluidströmung ein rohrförmiges Gehäuse, welches aus einer Mehrzahl von Rohrsegmenten 2 besteht. In der gezeigten Ausführungsform sind jeweils vier Rohrsegmente 2, von denen sich jedes über 90° in Umfangsrichtung des Gehäuses erstreckt, mittels jeweils eines Verbindungsprofils 3 in axialer Richtung des Gehäuses aneinander befestigt. Vorzugsweise dient eine Mehrzahl von Schrauben als Befestigungsmittel zwischen jedem Rohrsegment 2 und jedem Verbindungsprofil 3. In der Figur 1 ist diese Verschraubung durch das Bezugszeichen 34 bezeichnet. Einzelheiten des Rohrsegments 2 und des Verbindungsprofils 3 werden weiter unten mit Bezug zu den Figuren 11 bis 14 noch beschrieben werden. Es sind also vier Rohrsegmente 2 und vier Verbindungsprofile 3 über den Umfang betrachtet nebeneinander angeordnet und aneinander befestigt, um das rohrföhrmige Gehäuse der Anlage 1 auszubilden.

In axialer Richtung des Gehäuses der Anlage 1 sind die Rohrsegmente 2 hintereinander geschaltet bzw. angeordnet und über jeweils einen Flansch 10 an jedem Rohrsegment 2 miteinander verbunden. Die beiden Flansche 10 zweier in axialer Richtung benachbarter Rohrsegmente 2 sind mittels einer Vielzahl von Schrauben 11 miteinander lösbar verbunden.

Die Anzahl der hintereinandergeschalteten Rohrsegmente 2 zur Ausbildung der Anlage 1 ist frei wählbar.

Die Anlage 1 wird in ein strömendes Fluid eingesetzt bzw. eingebaut, wie etwa in einen Fluß, so dass das strömende Wasser in axialer Richtung durch das zylindrische Gehäuse der Anlage 1 strömt und die in der Figur 1 dargestellten Schaufeln 5 in Drehung um eine Antriebswelle 6 versetzt.

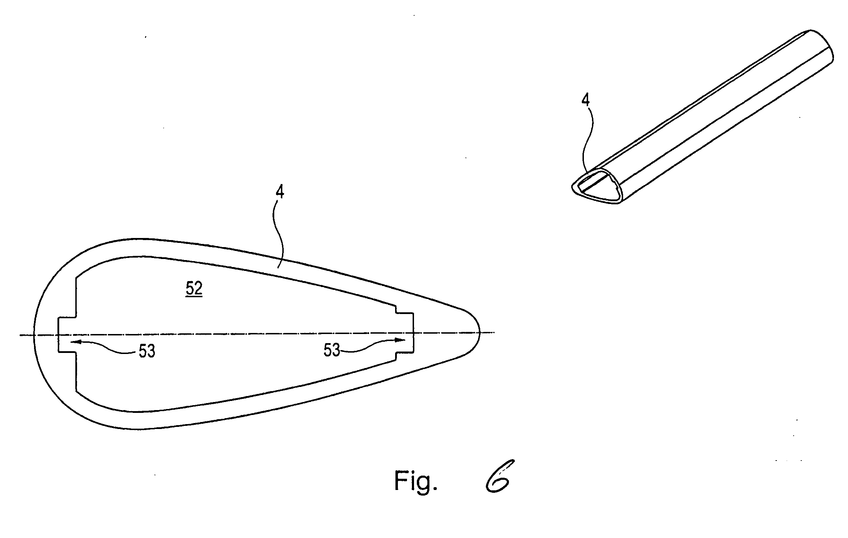

Die Antriebswelle 6 ist innerhalb des Gehäuses aus den Rohrsegmenten 2 mittig angeordnet und durch eine Vielzahl von Stützen 4 gegenüber dem Gehäuse abgestützt. Die Stützen 4 werden weiter unten und mit Bezug zu der Fig. 6 noch beschrieben werden. Die Stützen 4 sind jeweils an den Verbindungsprofilen 3 und damit radial außenliegend - mit Bezug zur Stütze - am Gehäuse der Anlage 1 lösbar befestigt, sowie die Stützen 4 radial innenliegend an einem Kugellagerkopf 12 befestigt sind, der jeweils mittels zumindest eines Kugellagers die Antriebswelle 6 trägt.

In der Figur 1 ist demnach, in radialer Richtung gesehen und ausgehend von der mittigen Antriebswelle 6, zuerst der Kugellagerkopf 12 vorgesehen, der sich mittels der Stützen 4 am Gehäuse der Anlage 1 abstützt. Die bisher genannten Bauteile sind im wesentlichen spielfrei aneinander montiert. Die Antriebswelle 6 kann sich in den mehreren Kugellagerköpfen 12, von denen in der Figur 1 vier Stück dargestellt sind, frei und möglichst reibungslos drehen.

Zwischen den Kugellagerköpfen 12 befinden sich die Schaufeln 5, die über Lagerschalen 7 mit der Antriebswelle 6 drehfest verbunden sind. Die Anzahl der Schaufeln 5 ist frei wählbar und an die Umgebungsbedingungen - d.h. die Fluidströmung - anpassbar. In der gezeigten Ausführungsform nach der Figur 1 sind jeweils 6 Paare von Schaufeln 5 zwischen zwei Kugellagerköpfen 12 eingebaut. Je nach Anforderung lassen sich eine frei wählbare Anzahl von Schaufeln 5 bwz. Schaufelpaaren zwischen je zwei Kugellagerköpfen 12 vorsehen.

Auch ist nicht notwendigerweise nur ein Schaufelpaar pro Lagerschalenpaar 7 vorzusehen. Über den Umfang verteilt wäre auch nur eine Schaufel, drei Schaufeln oder eine größere Anzahl von Schaufeln 5 denkbar. Als besonders vorteilhaft haben sich zwei oder drei Schaufeln 5 pro Lagerschalenpaar 7 über den Umfang verteilt herausgestellt.

Die Schaufeln 5 sind repellerartig ausgebildet. D.h., dass der Querschnitt des Profils jeder Schaufel 5 derart gewählt ist, dass eine maximale Entnahme der kinetischen Energie aus dem vorbei strömenden Fluid stattfindet und jede Schaufel 5 in Drehung um die Antriebswelle 6 durch das vorbei strömende Fluid versetzt wird.

In der Figur 1 ist ein Viertel des Gehäuses der Anlage 1 durch Weglassen einer Reihe von hintereinanderliegenden Rohrsegmente 2 offen dargestellt, so dass das Innere der Anlage 1 zu erkennen ist. Im Betrieb der Anlage 1 ist die fehlende Reihe der Rohrsegmente 2 selbstverständlich zu montieren und so das Gehäuse zu verschließen.

Schließlich ist in der Figur 1 noch ein Antriebswellenabtrieb 9 zu erkennen. An diesem Antriebswellenabtrieb 9 kann mittels eines Getriebes oder mittels eines Keilrippenriemens die Rotation der Antriebswelle 6 abgeleitet werden und einem Generator zur Erzeugung von elektrischer Energie zugeleitet werden. Alternativ kann die Rotation der Antriebswelle 6 auch direkt zum Antrieb einer anderen Maschine benutzt werden, wie beispielsweise einer Wasserpumpe, um Wasser aus einem Fluß oder See auf benachbarte Felder zu pumpen oder in Rohrleitungen zu pumpen.

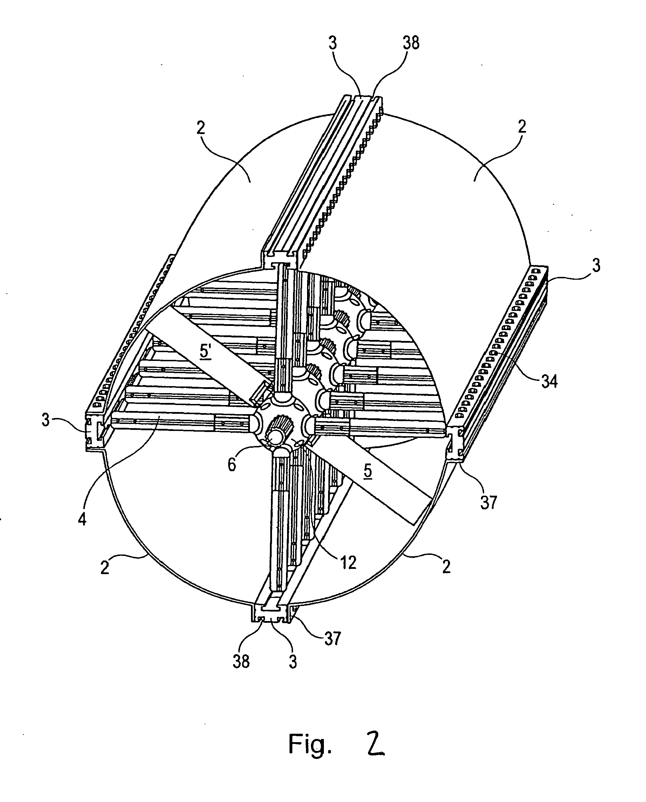

Unter Bezugnahme auf die Fig. 2 ist dort schematisch die erfindungsgemäße Anlage 1 in einer bevorzugten Ausführungsform dargestellt, wobei vier Rohrsegmente 2 mittels der vier Verbindungsprofile 3 in Umfangsrichtung aneinander befestigt sind. Innerhalb des so entstandenen zylindrischen Gehäuses aus den Rohrsegmenten 2 befindet sich zentral angeordnet die axial verlaufende Antriebswelle 6, deren Außenverzahnung in der Fig. 2 zu erkennen ist.

Auf dieser Antriebswelle 6 sind in axialer Richtung hintereinander jeweils die Kugellagerköpfe 12 angeordnet. In der schematischen Darstellung nach der Fig. 2 sind 6 Kugellagerköpfe 12 zu erkennen, die im Abstand zueinander und hintereinander auf der Antriebswelle 6 montiert sind. In dem freiliegenden Abstand zwischen nebeneinanderliegenden Kugellagerköpfen 12 ist jeweils die Außenverzahnung der Antriebswelle 6 zu sehen. In dem ersten (vorne in der Fig. 2) Abstand zwischen den ersten beiden Kugellagerköpfen 12 ist ein Paar von Lagerschalen montiert, an denen die Schaufeln 5 und 5 ' befestigt sind. Die Schaufeln 5 und 5' sind vereinfacht und lediglich schematisch in der Fig. 2 dargestellt. Es ist jedoch gut zu erkennen, dass auf diese Art und Weise eine äußerst stabile Vorrichtung geschaffen wird, die sich durch eine Vielzahl von Stützen 4 auszeichnet, wobei die Stützen 4 jeweils zwischen den Kugellagerköpfen 12 und dem Gehäuse bzw. den Verbindungsprofilen 3 die Verbindung herstellen. An jedem Kugellagerkopf 12 sind in der gezeigten Ausführungsform vier Stützen 4 vorgesehen, die über den Umfang jeweils um 90° versetzt zueinander positioniert sind.

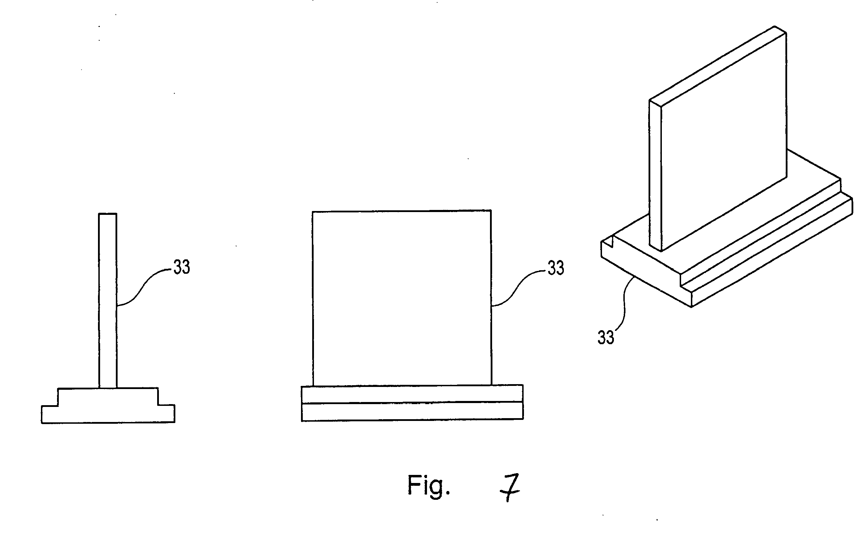

Die Stützen 4 greifen an den Kugellagerköpfen 12 in Fortsätze ein, die mit Bezug zu den Figuren 17 bis 19 noch näher beschrieben werden. Jedenfalls sind die Stützen 4 an den Kugellagerköpfen 12 spielfrei montiert. An den anderen Enden der Stützen 4, die am Verbindungsprofil 3 des Gehäuses montiert sind, dienen Nutensteine 33, die in der Fig. 7 dargestellt sind, als Verbindungselement, um eine spielfreie Verbindung zwischen der Stütze 4 und dem Verbindungsprofil 3 herzustellen.

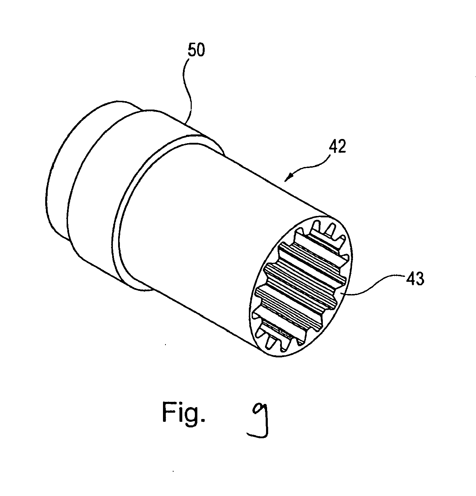

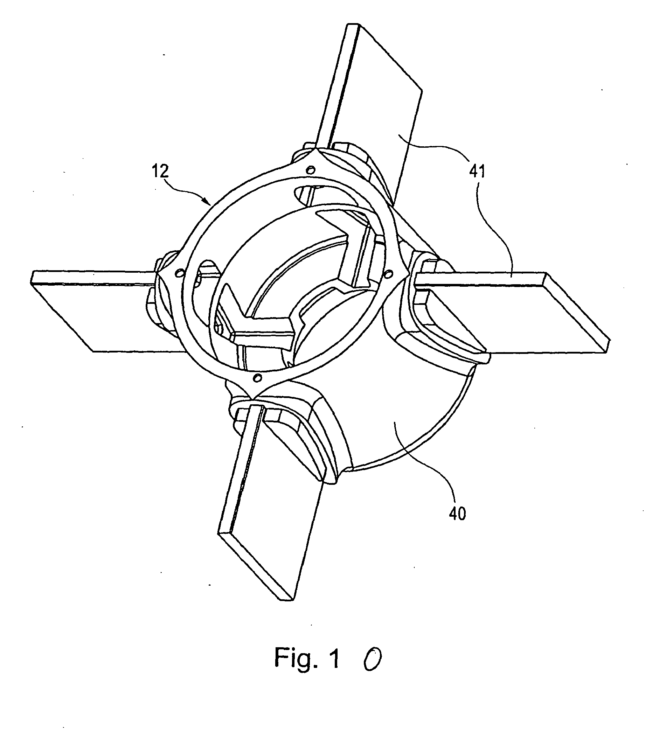

Der Querschnitt einer besonders bevorzugten Stütze 4 ist in der Fig. 6 dargestellt, wobei jede Stütze 4 ein Profil aufweist, welches einen Hohlraum 52 hat, um Gewicht und Material und damit Kosten einzusparen, sowie die Außenform jeder Stütze 4, im Gegensatz zu der schematischen Darstellung in den Figuren 9 und 10, eine strömungsgünstige Gestaltung hat. Dem Fachmann ist klar, dass sich die Stütze 4 in einem strömenden Fluid befindet und für die Schaufeln 5 bzw. 5' nach der Fig. 2 ein Hinderniss darstellt, da die Schaufel 5 und 5' die kinetische Strömungsenergie aus dem vorbeiströmenden Fluid entnehmen soll und in eine Drehung der Antriebswelle 6 umwandeln soll. Aus diesem Grund und um eine möglichst geringe Verwirbelung des anströmenden Fluids zu bewirken, ist die Stütze 4 nach der Fig. 6 als Tragflächenprofil ausgebildet. Das spitze Ende der Stütze 4 weist dabei nach hinten (stromabwärts, in Strömungsrichtung des Fluids) und das runde, dickere Ende der Stütze 4 ist nach vorne (stromaufwärts) orientiert. Diese Einbaulage ist auch in der Figur 1 dargestellt.

Die Stützen 4 sind vorzugsweise aus Aluminium gefertigt und weisen eine Wandstärke auf, die die auftretenden Kräfte und Schwingungen zwischen Antriebswelle 6 und Gehäuse sicher übertragen und aufnehmen kann.

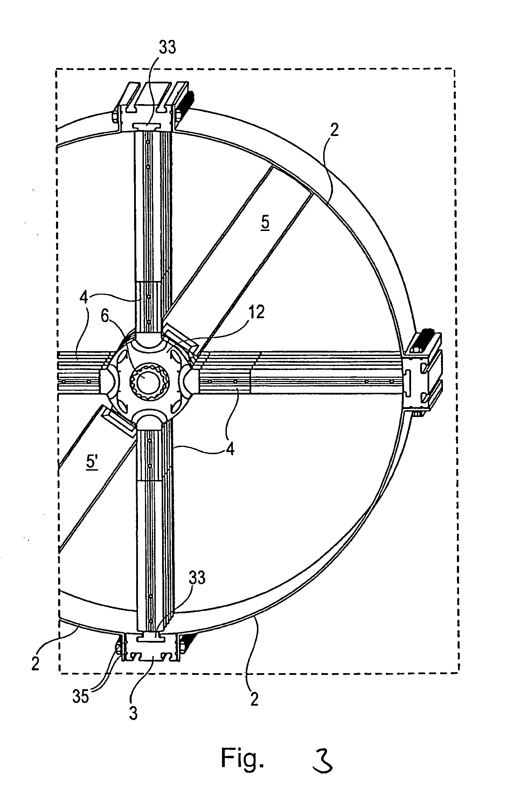

Ein Nutenstein 33, der zwischen jeder Stütze 4 und dem Verbindungsprofil 3 angeordnet ist, ist in der Fig. 7 in mehreren Ansichten dargestellt. Das breite abgestufte Basisende des im Querschnitt im wesentlichen T-förmigen Nutensteines 33 wird in die Nut 51 des Verbindungsprofils 3 eingeführt. Mittels Schrauben (nicht dargestellt), die durch das Verbindungsprofil 3 von außen durch Gewindebohrungen eingeschraubt werden, werden die Nutensteine 33 nach der Positionierung in der Nut 51 fixiert, indem das Ende der Schraube mit dem Gewinde auf die breite Basisfläche des Nutensteins 33 drückt und diesen in der Nut 51 gegen die radial innenliegende Fläche (in der Fig. 3) presst.

Das andere Ende des Nutensteines 33, welches als platten- bzw. quaderförmiger Fortsatz ausgebildet ist und welches sich in der Fig. 7 nach oben erstreckt, greift in den Hohlraum 52 der Stütze 4 in dort ausgebildete kleine Vertiefungen 53 formschlüssig ein. Die Vertiefungen 53 weisen im Querschnitt eine rechteckige Form auf, die dem plattenförmigen Fortsatz des Nutensteines 33 entspricht und der Eingriff dazwischen ist im wesentlichen spielfrei.

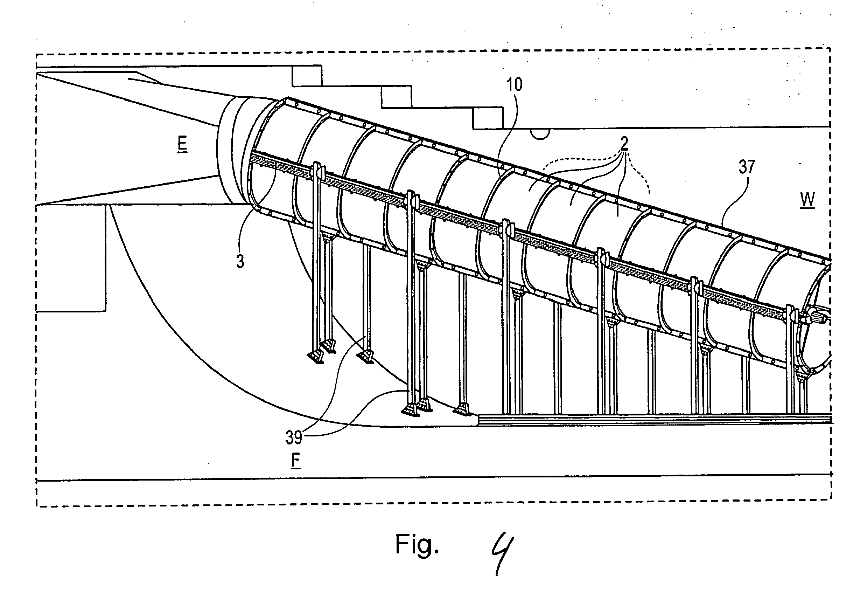

Ein vorteilhaftes Verbindungsprofil 3 zur Verbindung der Rohrsegemente 2 untereinander sowie zur Befestigung der Stützen 4 ist in der Figur 14 dargestellt. Dort ist in mehreren Ansichten ein erfindungsgemäßes Verbindungsprofil 3 gezeigt, wobei dieses Verbindungsprofil 3 vorzugsweise als Aluminiumstrangpreßteil ausgebildet und hergestellt ist. Die Nut 51 dient der Aufnahme des bzw. der Nutensteine 33 sowie die Nuten 38 der Aufnahme von kleineren Nutensteinen (nicht dargestellt) dienen. An den Nuten 38 werden Abstützmittel 39 mit den kleineren nicht dargestellten Nutensteinen auf ähnlich Art und Weise wie mit den Nutensteinen 33 die Stützen 4 fixiert sind, angebracht, um eine Anlage 1 beispielsweise mittels einer Vielzahl von Abstützmitteln 39 in einem Flußbett F zu verankern. Eine solche Verankerung ist beispielhaft in der Fig. 4 dargestellt.

Über einen Einlauf E, der trichterförmig ausgebildet sein kann, wird das im Fluß strömende Wasser W in die Anlage 1 eingeleitet. Die Anlage 1 weist das Gehäuse aus den Rohrsegmenten 2 auf, die untereinander über die Flansche 10 und über die Ränder 37 miteinander verbunden sind. An den Verbindungsprofilen 3 sind die Abstützmittel 39 mit den kleineren und nicht dargestellten Nutensteinen befestigt. Die Abstützmittel 39 können im Flußbett auf übliche Art und Weise verankert sein.

An den Seiten der Verbindungsprofile 3 befinden sich kleine Nuten, die der Aufnahme von Dichtungen 35 dienen. Der Rand 37 (Fig. 2) jedes Rohrsegments 2 wird mit dem Verbindungsprofil 3 mittels einer Verschraubung aus einer Vielzahl von Schrauben fest verbunden.

Jedes Rohrsegment 2 weist gemäß Figur 11, die eine besonders vorteilhafte Ausführungsform in mehreren Ansichten zeigt, in Umfangsrichtung einen Viertelbogen im Querschnitt auf, sowie - in axialer Richtung der Anlage 1 gesehen - einen Rand 37 an beiden Enden in Umfangsrichtung. An den Enden in axialer Richtung sind Flansche 10 vorgesehen. Mittels der Ränder 37 und der Flansche 10 werden mehrere Rohrsegmente 2 in Umfangsrichtung und in axialer Richtung der Anlage 1 aneinander befestigt. Hierzu sind Bohrungen in den Rändern 37 und in den Flanschen 10 ausgebildet (in der Figur 11 durch Punkte dargestellt), die von Schrauben durchgriffen werden. Zur Verstärkung jedes Rohrsegmentes 2 kann eine Verstärkungsrippe 36 ausgebildet werden. Vorzugsweise und wie in der Figur 11 in der mittigen Darstellung gezeigt, werden vier viertelbogenförmige Rohrsegmente 2 mittels vier Verbindungsprofilen 3 zu einem im Querschnitt kreisförmigen Gehäuseabschnitt der Anlage 1 zusammen gebaut. Solche im Querschnitt kreisförmigen Gehäuseabschnitte können hintereinander montiert werden, um die Anlage 1 in axialer Richtung zu verlängern.

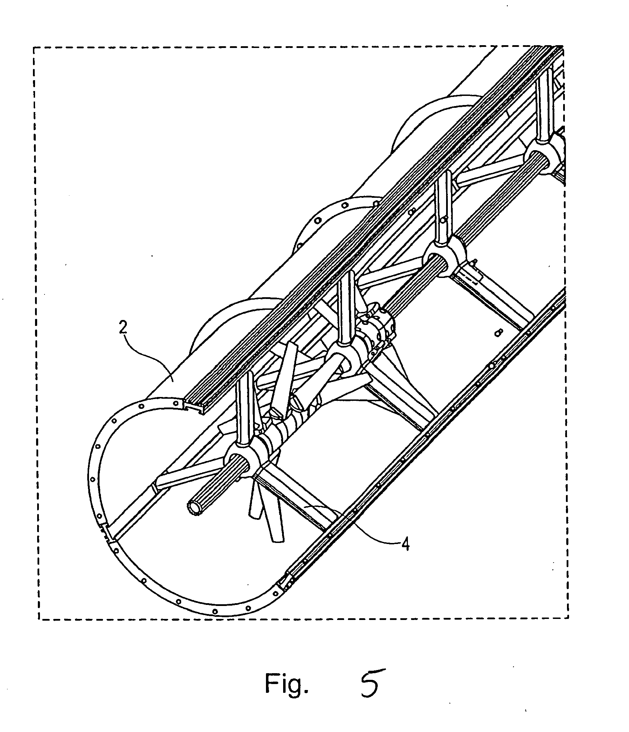

Die im Querschnitt kreisförmigen Gehäuseabschnitte können jedoch nach einer anderen bevorzugten Ausführungsform auch aus drei Rohrsegmenten 2 bestehen - dann erstreckt sich ein Rohrsegment 2 jeweils über 120° am Umfang des Gehäuses der Anlage 1. Eine solche Anlage ist in der Fig. 5 dargestellt, wobei dann auch nur drei Stützen 4 über den Umfang verteilt zur Abstützung der Antriebswelle 6 vorgesehen sind. Hierdurch werden weniger Bauteile benötigt und die Kosten für die Fertigung der Bauteile können gesenkt werden. Ebenso wird der Aufwand für die Montage verringert, da weniger Bauteile aneinander zu montieren sind. Die Zugänglichkeit zum Inneren der Anlage 1 verbessert sich auch, da, wenn eines der Rohrsegmente 2 zu Wartungszwecken enfernt worden ist, der Zugang zum Inneren des Gehäuses größer ist als bei einem vierteiligen Gehäuse. Die Öffnung bei einem dreiteiligen Gehäuse (in Umfangsrichtung) beträgt 120° gegenüber lediglich 90° bei einem vierteiligen Gehäuse.

Schließlich ist noch ein weiterer Vorteil des erfindungsgemäßen Gehäuses nach der vorliegenden Erfindung festzuhalten: in die außenliegenden Nuten 38 der Verbindungsprofile 3 lassen sich beispielsweise Ösen (nicht dargestellt) einsetzen bzw. einschrauben, die bei der Fertigung, beim Transport oder dem Einbau vor Ort hilfreich sein können. Das Gehäuse bzw. die Anlage 1 kann zum Beispiel mittels dieser Ösen einfach angehoben und positioniert werden.

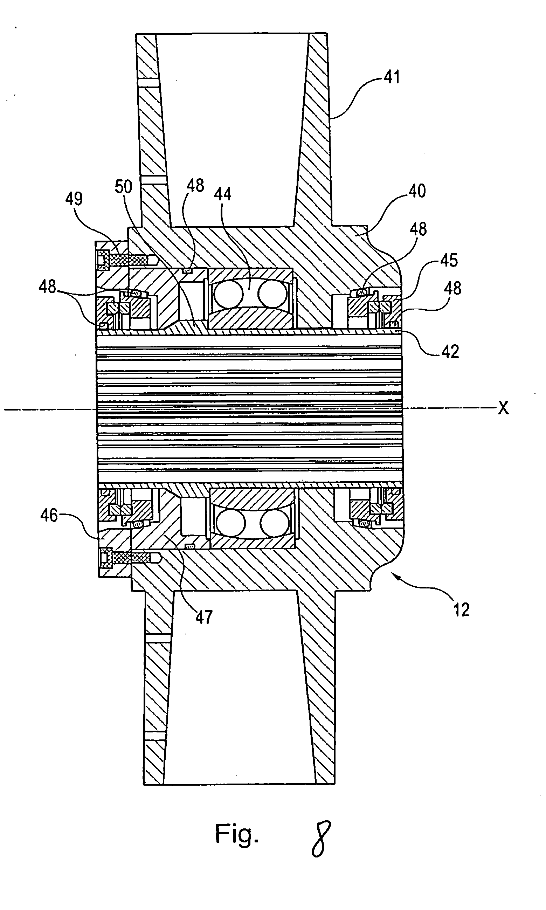

In den Figuren 17, 18 und 19 ist ein erfindungsgemäßer Kugellagerkopf 12 in zwei Ausführungsformen dargestellt. Wie oben bereits erläutert, dient der Kugellagerkopf 12 zur Lagerung der Antriebswelle 6 in dem Gehäuse bzw. in der Anlage 1. Die Details einer bevorzugten Ausführungsform dieses Kugellagerkopfes 12 werden mit Bezug zu der Fig. 8 nun beschrieben.

Der Kugellagerkopf 12 weist einen Grundkörper 40 auf, der im wesentlichen zylindrisch ausgebildet ist und nach zwei Seiten in axialer Richtung X offen ist, so dass eine Zylindermantelfläche ausgebildet ist, die in der gezeigten (Figur 19) zweiten und ebenfalls bevorzugten Ausführungsform vier Fortsätze 41 aufweist, die am Umfang um jeweils 90° voneinander beabstandet sind und sich radial nach außen erstrecken. Der Querschnitt dieser Fortsätze ist im wesentlichen rechteckig und greift im montierten Zustand in den Hohlraum 52 der Stütze 4 und dort in die Vertiefungen 53 ein.

An dem den Außenumfang des Grundkörpers 40 zugewandten Ende des Fortsatzes 40 weist der Fortsatz 41 eine abgestufte Basis auf, die in der Form dem Querschnitt des Hohlraumes 52 in der Stütze 4 entspricht, so dass eine weitere Verdrehsicherung der Stütze 4 durch Formschluß zwischen dem Fortsatz 41 und der Stütze 4 ausgebildet ist. Diese spezielle Ausbildung der Fortsätze 41 ist in der Figur 19 gut zu erkennen.

In der Figur 19 sind zudem Hinterschneidungen bzw. Vertiefungen 53 am Innenumfang des zylindrischen Grundkörpers 40 zu sehen, die radial innerhalb der Fortsätze 41 ausgebildet sind.

Zurückkommend auf die Fig. 8, ist dort jeder Fortsatz 41 als sich ebenfalls in radialer Richtung erstreckender und im linken Querschnitt mit Bohrungen versehener Fortsatz dargestellt. Mit Hilfe dieser Bohrungen, in die Schrauben eingreifen können, kann die Stütze 4 an dem Grundkörper 40 befestigt werden.

Der Grundkörper 40 kann in axialer Richtung X auf beiden Seiten jeweils mit einem Deckel 45 und 46 verschlossen werden, wobei zwischen dem Grundkörper 40 und jedem Deckel 45 und 46 eine oder mehrere Dichtungen 48 angeordnet sein können. In der gezeigten Ausführungsform nach der Fig. 8 ist zwischen dem linken Deckel 46 und einem Kugellager 44 ein Halteelement 47 angeordnet, welches den Außenring des Kugellagers 44 festlegt. Auch zwischen dem Halteelement 47 und dem Grundkörper 40 kann eine weitere Dichtung 48 vorgesehen sein, um das Eindringen von Fluid in das Kugellager 44 sicher zu verhindern.

Die Deckel 45 und 46 werden mit Hilfe von Befestigungsmitteln bzw. Schrauben 49 am Grundkörper verschraubt oder alternativ in den Grundkörper in die axialen Endöffnungen eingepreßt. Zwischen dem Innenring des Kugellagers 44 und dem Grundkörper 40 ist eine Hülse 42 vorgesehen und angeordnet, deren Aufbau in der Fig. 9 dargestellt ist. Die Hülse 42 weist einen sich radial nach außen erstreckenden Absatz 50 auf, der in axialer Richtung X der Hülse 42 eine gerade, in radialer Richtung nach außen verlaufende Abstufung hat, die gegen den Innenring des Kugellagers 44 drückt und diesen festlegt, während die andere Seite des Absatzes 50 eine schräge Kante hat, gegenüber welcher das Halteelement unter Einhaltung eines geringen, für die Rotation erforderlichen Abstandes, angeordnet ist.

Die Hülse 42 weist eine Innenverzahnung 43 auf, die mit der Außenverzahnung 26 der Antriebswelle 6 in Eingriff steht. Die Antriebswelle 6 kann sich in dem Kugellagerkopf 12 in dem Kugellager 44 frei drehen, während der Grundkörper 40 feststeht und sich über die Stützen 4 an dem Gehäuse der Anlage 1 abstützt.

Solche Kugellagerköpfe 12 werden je nach Bedarf und mehrfach entlang der Antriebswelle 6 angeordnet, wobei vorzugsweise jeden Meter ein Kugellagerkopf 12 montiert wird, um die Antriebswelle 6 optimal zu lagern und die Vibrationen gering zu halten sowie so für einen geräuscharmen Lauf der Antriebswelle 6 zu sorgen.

Die dauergeschmierten und wartungsarmen Kugellager 44 sind sicher und fluiddicht innerhalb des Grundkörpers 40 des Kugellagerkopfes 12 angeordnet, so dass ein wartungsarmer Betrieb der Anlage 1 sicher gestellt ist.

Grundsätzlich läßt sich an einem Ende der Antriebswelle auch ein Planetengetriebe als Teil eines Kugellagerkopfes vorsehen. Das jeweilige Kugellager kann dann weggelassen werden und durch ein entsprechend dimensioniertes Planetengetriebe ersetzt werden. Der Abtrieb der sich drehenden Antriebswelle kann durch das Planetengetriebe in vielfacher Hinsicht modifiziert und eingestellt werden, so beispielsweise im Hinblick auf die Drehzahl bzw. das Drehmoment des Abtriebs, welche bzw. welches sich durch ein Planetengetriebe einfach einstellen läßt.

Hinsichtlich vorstehend im einzelnen nicht näher erläuterter Merkmale der Erfindung wird in übrigen ausdrücklich auf die sich anschließenden Patentansprüche und die zugehörigen Zeichnungen verwiesen.

### Bezugszeichenliste

- 1: Anlage
- 2: Rohrsegment
- 3: Verbindungsprofil
- 4: Stütze
- 5: Schaufel
- 5': Schaufel
- 6: Antriebswelle
- 7: Lagerschale
- 7': Lagerschale
- 8: Justierscheibe
- 9: Antriebswellenabtrieb
- 10: Flansch
- 11: Schraube
- 12: Kugellagerkopf
- 26: Außenverzahnung
- 33: Nutenstein
- 34: Verschraubung
- 35: Dichtung
- 36: Verstärkungsrippe
- 37: Rand
- 38: Nut
- 39: Abstützmittel
- 40: Grundkörper
- 41: Fortsatz
- 42: Hülse
- 43: Innenverzahnung
- 44: Kugellager
- 45: Deckel
- 46: Deckel
- 47: Halteelement
- 48: Dichtung
- 49: Befestigungsmittel
- 50: Absatz
- 51: Nut
- 52: Hohlraum
- 53: Vertiefung

- E: Einlauf
- F: Flußbett
- W: Wasser
- X: Achse d. Kugellagerkopfs

## Patentansprüche

1. Kugellagerkopf (12) einer Anlage (1) zur Erzeugung von Energie aus einer durch die Anlage (1) geleiteten Fluidströmung, wobei eine Mehrzahl von Schaufeln (5, 5') entlang einer Antriebswelle (6) der Anlage (1) jeweils axial und radial zueinander beabstandet innerhalb eines Gehäuses angeordnet ist, **dadurch gekennzeichnet, dass** der Kugellagerkopf (12) einen Grundkörper (40) aufweist, der mehrere Fortsätze (41) hat, die sich in radialer Richtung vom Grundkörper (40) aus nach außen erstrecken und die Aufnahmen für Stützen (4) ausbilden, die die Antriebswelle (6) gegenüber dem Gehäuse der Anlage (1) abstützen, wobei in dem Grundkörper (40) eine Hülse (42) konzentrisch angeordnet ist, die eine Innenverzahnung (43) hat, die mit einer Außenverzahnung (26) der Antriebswelle (6) in Eingriff steht, und wobei zwischen dem Grundkörper (40) und der Hülse (42) ein Kugellager (44) derart vorgesehen ist, dass sich die Antriebswelle (6) relativ zum Grundkörper (40) frei verdrehen kann.

2. Kugellagerkopf nach Anspruch 1, **dadurch gekennzeichnet, dass** vier oder drei Fortsätze (41) vorgesehen sind, die in Umfangsrichtung um jeweils 90° oder 120° voneinander beabstandet angeordnet sind.

3. Kugellagerkopf nach Anspruch 1 oder 2, **dadurch gekennzeichnet, dass** pro 1 m Längeneinheit der Anlage (1) in axialer Richtung zumindest ein Kugellagerkopf (12) zur Abstützung der Antriebswelle (6) vorgesehen ist.

4. Kugellagerkopf nach einem der Ansprüche 1 bis 3, **dadurch gekennzeichnet, dass** an den axialen Enden des Kugellagerkopfes (12) jeweils ein Deckel (45, 46) vorgesehen ist, der das Innere des Kugellagerkopfes (12) gegen das Äußere fluiddicht abtrennt.

5. Kugellagerkopf nach Anspruch 4, **dadurch gekennzeichnet, dass** zwischen jedem Deckel (45, 46) und dem Grundkörper (40) jeweils zumindest eine Dichtung (48) vorgesehen ist.

6. Kugellagerkopf nach einem der Ansprüche 4 bis 5, **dadurch gekennzeichnet, dass** zwischen dem Deckel (46) und dem Kugellager (44) ein Halteelement (47) vorgesehen ist, mit dem die axiale Festlegung eines Außenringes des Kugellagers (44) erfolgt.

7. Kugellagerkopf nach einem der Ansprüche 1 bis 6, **dadurch gekennzeichnet, dass** ein Innenring des Kugellagers (44) mittels eines Absatzes (50) an der Hülse (42) in axialer Richtung festgelegt ist.

8. Kugellagerkopf nach einem der Ansprüche 4 bis 7, **dadurch gekennzeichnet, dass** der Deckel (46) mittels zumindest eines Befestigungsmittels (49) an dem Grundkörper (40) fixiert ist.

9. Kugellagerkopf (12) nach einem der Ansprüche 1 bis 8, **dadurch gekennzeichnet, dass** die Stützen (4), der Grundkörper (40), das Kugellager (44), die Hülse (42), sowie die Antriebswelle (6) im wesentlichen spielfrei zusammengebaut sind.
